Europäisches Patentamt

European Patent Office

Office européen des brevets

(11) Publication number : **0 637 146 A1**

## (12) EUROPEAN PATENT APPLICATION

(21) Application number : **94305388.4**

(22) Date of filing : **21.07.94**

(51) Int. Cl.⁶ : **H04B 10/142**

(30) Priority : **26.07.93 GB 9315431**

(43) Date of publication of application :
**01.02.95 Bulletin 95/05**

(84) Designated Contracting States :
**DE ES FR IT SE**

(71) Applicant : **GPT LIMITED**
**New Century Park**
**P.O. Box 53**
**Coventry, CV3 1HJ (GB)**

(72) Inventor : **Batchellor, Charles Robert**
**42 Orne Gardens**
**Bolbeck Park, Milton Keynes MK15 8PG (GB)**

(74) Representative : **Branfield, Henry Anthony**
**The General Electric Company, p.l.c.**
**GEC Patent Department**
**Waterhouse Lane**
**Chelmsford, Essex CM1 2QX (GB)**

(54) **Coherent optical communication system.**

(57) An optical communication system includes a transmitter and a receiver and a single local oscillator (2) serving both the transmitter and the receiver, the output (4) of the local oscillator (2) is directly fed to one input of a coherent receiver (5) which also receives on another input (6) a modulated spectrum and which gives as an output (7) an intermediate frequency spectrum to a bi-polar frequency reverse slope discriminator (9) which includes an adder circuit to recover the received data using the transmitted data stream.

*Fig.1.*

EP 0 637 146 A1

This invention relates to an optical communication system and particularly to a system relying on optical fibre communications and employing lasers for both reception and transmission of signals incorporating the super heterodyne principle. In any communication system employing the super heterodyne principle a local oscillator is employed to generate a locally produced signal to be imposed on a received or transmitted signal to produce a necessary beat function. If optical communication equipment includes both receiver and transmitters then each part of the equipment, i.e. the transmitter and the receiver each require a laser. Since lasers are expensive, it has been proposed that a single laser should be used to perform both roles and the proposal has been that the local oscillator laser should act not only as a reception but also as a transmitter laser. It is a disadvantage of this technique that modulating the transmitter frustrates the receiver function. This requires either partial duplex operation (transmitting or receiving) or the employment of an external modulator, which can be both expensive and lossy, so that an unmodulated signal is available to the receiver.

It is an object of the present invention to provide a improved optical communication system using a single laser which permits both transmission and receiver operation.

According to the present invention in an optical communication system including a transmitter and a receiver and a single local oscillator serving both the transmitter and the receiver, the output of the local oscillator is directly fed to one input of a coherent receiver which also receives at another input a modulated spectrum and which gives as an output an intermediate frequency spectrum to a bi-polar frequency discriminator which includes an adder circuit to recover the received data using the transmitted data stream.

Preferably the discriminator is a reverse slope discriminator and maps the intermediate frequency components to a normalized bi-polar output.

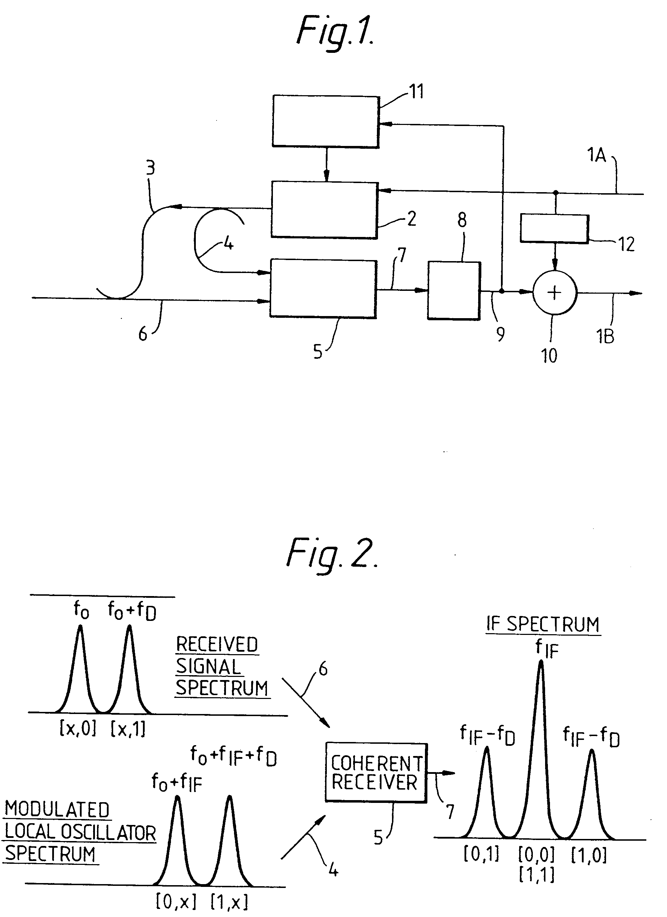

An embodiment of the invention will now be described with reference to the two figures of the accompanying drawings. In the Figures, Figure 1 shows the design of an optical communicator system incorporating a coherent transceiver embodying the invention and Figure 2 shows the frequency spectra used with the design of Figure 1.

Referring first to Figure 1 this shows lines 1A and 1B over which data is optically transmitted and received respectively, a local laser oscillator 2 which feeds an output over line 3 and a further output over line 4 to one input of a coherent receiver 5 which also receives at another input over line 6 a modulated received spectrum. The output of the receiver 5 is fed over line 7 as the intermediate frequency spectrum to a discriminator 8 the output of which is fed over line 9 to an adder 10 which is connected to line 1B. The output from discriminator 8 is also fed to an automatic frequency control element 11 which controls the local oscillator 2.

A re-timed module 12 connects between the line 1A and the line 1B and feeds into the adder 10. This module 12 retimes the data signal to compensate for propagation delay of the transmitted signal through the local oscillator laser 2, the coherent receiver 5 and the discriminator 9. It does not perform synchronisation of the received and transmitted data streams.

Referring now to figure 2, this shows the various spectra of the signals dealt with by the coherent receiver and the output therefore. The received signal spectrum over line 6 is shown with two peaks $f_o$ which is the carrier frequency and also $f_o+f_D$ where $f_D$ is a deviation frequency. This is the signal which is appearing on line 6 to receiver 5 and below this is shown the modulated signal spectrum received by receiver 5 over line 4 from oscillator 2 and is the carrier frequency $f_o$ plus the receiver intermediate frequency $f_{IF}$. On the right hand side of the figure is shown the output to the discriminator on line 7 which is the IF spectrum and as indicated, this shows three peaks, one of the intermediate frequency $f_{IF}$ in the centre with the peak for the intermediate frequency less the deviation frequency $f_D$ on the left ($f_{IF} - f_D$) and plus the deviation frequency $f_D$ on the right ($f_{IF} + f_D$). To recover the received data stream the data is passed through the discriminator 8 which is a reverse slope discriminator and this maps the intermediate frequency components to a normalised bipolar output as shown in table 1.

TABLE 1

| DATA | IF | | DISCRIMINATOR |
|---|---|---|---|
| State | Component | $\rightarrow$ | Output |
| [0,0], [1,1] | $f_{IF}$ | $\rightarrow$ | 0 |
| [0,1] | $f_{IF}-f_D$ | $\rightarrow$ | 0 |
| [1,0] | $f_{IF}+f_D$ | $\rightarrow$ | 0 |

If this discriminator output is added to the transmitted data (assuming that both signals are electrically normalized to the same bipolar levels, then the received data is recovered as shown in table II).

## TABLE II

| DATA State | DISCRIMINATOR Output | | TX Data | | RX Data |
|---|---|---|---|---|---|
| [0,0] | 0 | + | 0 | = | 0 |
| [0,1] | 1 | + | 0 | = | 1 |
| [1,0] | -1 | + | 1 | = | 0 |
| [1,1] | 0 | + | 1 | = | 1 |

This enables the system to operate using super heterodyne principles and only a single laser is necessary for the local oscillator 2 which is used simultaneously as an oscillator and a transmitter.

## Claims

1. An optical communication system includes a transmitter and a receiver and a single local oscillator serving both the transmitter and the receiver, wherein the output of the local oscillator is directly fed to one input of a coherent receiver which also receives at another input a modulated spectrum and which gives as an output an intermediate frequency spectrum to a bi-polar frequency discriminator which includes an adder circuit to recover the received data using the transmitted data stream.

2. A system as claimed in Claim 1, wherein the discriminator is a reverse slope discriminator and maps the intermediate frequency components to a normalized bipolar output.

3. A system as claimed in Claim 1 or Claim 2, wherein the local oscillator is a single laser oscillator and simultaneously as an oscillator and a transmitter.

4. A system as claimed in any preceding claim, wherein the output from the bipolar frequency discriminator is also fed to an automatic frequency control element to produce an output signal to control the local oscillator.

# Fig.1.

# Fig.2.

**European Patent Office**

## EUROPEAN SEARCH REPORT

Application Number

EP 94 30 5388

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP-A-0 438 832 (PHILIPS)<br>* column 3, line 52 - column 5, line 40 *<br>* figures 1,2 *<br>--- | 1-4 | H04B10/142 |
| A | EP-A-0 354 567 (STANDARD ELEKTRIK LORENZ)<br>* column 4, line 19 - column 7, line 14 *<br>* figures 1-3 *<br>----- | 1-4 | |
| | | | TECHNICAL FIELDS SEARCHED (Int.Cl.6)<br><br>H04B |

The present search report has been drawn up for all claims

| Place of search | Date of completion of the search | Examiner |
|---|---|---|
| THE HAGUE | 20 October 1994 | Williams, M.I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)